# EUROPEAN PATENT SPECIFICATION

(11) **EP 4 097 056 B1**
(45) Date of publication and mention of the grant of the patent: **24.04.2024**
(21) Application number: 21702963.6
(22) Date of filing: 29.01.2021
(51) Int. Cl.: C03B 1/00, C03B 3/02, C03B 5/12, C03C 1/02, C03C 13/06, C03C 3/097

(54) **METHOD OF MAKING MINERAL FIBRES**
VERFAHREN ZUR HERSTELLUNG VON MINERALFASERN
PROCÉDÉ DE FABRICATION DE FIBRES MINÉRALES

(30) Priority: 30.01.2020 EP 20154748
(43) Date of publication of application: 07.12.2022
(73) Proprietor: ROCKWOOL A/S, 2640 Hedehusene (DK)
(72) Inventor: HANSEN, Lars Elmekilde, 2640 Hedehusene (DK); LARSEN, Ejvind Voldby, 2640 Hedehusene (DK)
(74) Representative: Gill Jennings & Every LLP
(86) International application number: PCT/EP2021/052197
(87) International publication number: WO 2021/152142

(56) References cited:
- WO-A1-99/28250
- US-A- 5 558 690

## Description

### FIELD OF INVENTION

The invention relates to the melting of mineral raw material to form a mineral melt, to make man-made vitreous fibres (MMVF).

### BACKGROUND

Cyclone furnaces for melting mineral raw material are known in the art. Such furnaces are typically fuelled by coal or coke. Cyclone furnaces are e.g. described in WO03/002469 and WO2008/019780.

WO9928250 A1 teaches with a process for making glass fibers containing 7.5 wt% FeO, whereby the raw material contains metallic aluminium. In this example a solid fuel is employed in a shaft furnace, but it is also said in WO9928250 A1 that gaseous fuel can be used and that the furnace may alternatively be a tank furnace. US5558690 A discloses the making of glass-ceramic tiles by melting raw material containing metallic aluminium and 0-8 wt% Fe2O3 in a cyclone furnace that among other options may be heated using gaseous fuel, followed by making the tiles from the melt.

For a number of reasons it is preferable to use solely gaseous fuel instead of coal or a mixture of fuel types. The environmental profile of gas is better than coal. It can be more sustainably supplied, for instance as biogas; its use can be carbon dioxide neutral. It can also be beneficial as it is less expensive, at least partly due to lower carbon tax. Use of gas also requires less sulphur dioxide cleaning. However, in the context of a gas-fuelled cyclone furnace, it has been found that the resulting MMVF products show excessive shrinkage from sintering when subjected to high temperature. Shrinkage leads to formation of thermal bridges which may be crucial if the products are used for fire protection. In general, low-density products show greater shrinkage than high-density products.

It would be desirable to provide a method whereby a melt can be made that is then suitable for processing into MMVF, using a cyclone furnace to provide the melt but with the possibility to use gaseous fuel, without leading to a tendency to excessive shrinkage in the product. It would also be desirable to be able to make products with reduced tendency to shrinkage even in the context of coal-fuelled cyclone furnaces.

### SUMMARY

The above problems are resolved by the method of the invention, which is a method of making man-made vitreous fibres (MMVF) which comprise at least 3 wt% iron oxides determined as Fe₂O₃, the method comprising
providing a cyclone furnace,
providing mineral raw material comprising (a) material that comprises metallic aluminium and (b) other mineral component,
providing fuel and combustion gas to the cyclone furnace, wherein the fuel is gaseous,
melting the mineral raw material in the cyclone furnace to form a mineral melt,
and forming MMVF from the melt.

The invention is based on the recognition that shrinkage of consolidated MMVF products is due in large part to the ratio of FeO:Fe₂O₃, i.e. the ratio of Fe(II):Fe(III). In the coal-fired cyclone furnaces of the state of the art, reducing conditions arise by virtue of the coal, coke or other carbonaceous particulate fuel. This results in a desirable ratio of Fe(II):Fe(III) and as a consequence the degree of shrinkage of consolidated MMVF products made from melt from a coal-fired cyclone furnace is often within an acceptable range.

A gas-fired cyclone furnace does not have the same reducing conditions as a coal-fired cyclone furnace. Other fuel types than coal and coke may suffer from the same problem.

The inventors realised that this problem could be addressed by providing a small amount of metallic aluminium to the mineral raw material (mineral charge). The metallic aluminium reacts with iron oxide in a highly exothermic reaction, thereby reducing Fe(lll) and at the same time providing Al₂O₃, which is a necessary component of the chemistry of MMVF.

The source of metallic aluminium in the present invention may be a material comprising from 45 wt% metallic aluminium to 100 wt% metallic aluminium, such as to 99.5 wt% or to 99 wt% metallic aluminium, or alu-dross.

Alu-dross is a particulate waste material from the aluminium processing industry and comprises primarily (usually 50 to 90 wt%) Al₂O₃, with around 0.5 to 10 wt% metallic aluminium. Alu-dross may make up from 5 to 30 wt% of the total mineral charge, such as approximately 10 wt%.

Some sources of alu-dross comprise residual ammonia. For these materials, it is preferred to subject the alu-dross to high temperature, for example a minimum of 800°C, in order to decompose the ammonia. Lower temperatures will not properly decompose ammonia and instead result in gaseous ammonia in the exhaust stream, which in turn often would require further processing to remove ammonia.

To remove ammonia, the alu-dross may be injected directly into the top of the cyclone furnace at ambient temperature. The alu-dross is thereby immediately subjected to sufficiently high temperature to fully decompose any residual ammonia. The alu-dross may be premixed with the other mineral component, but may also be injected directly into the furnace on its own.

Another optional method step to remove ammonia is to inject the alu-dross into the hottest part of the cyclone preheater system, whereby it mixes with the other mineral component which has already been preheated. This optional step is more thermally efficient.

Where the alu-dross contains no ammonia, or amounts that are not problematic at the location of the cyclone furnace, preferably the alu-dross is pre-mixed with the other mineral components of the mineral charge and the total mineral charge is supplied as a mixture to the cyclone furnace. This has the benefit of ensuring constant composition of the MMVF produced by the invention.

The alu-dross comprise from 0.5 to 10 wt% metallic aluminium, from 50 to 90 wt% alumina Al₂O₃ and from 0 to 49.5 wt% other materials. Preferably the alu-dross comprises from 2 to 6 wt% metallic aluminium. The other materials may include one or more of SiO₂, MgO and Fe₂O₃. Preferably the alu-dross comprises oxides of corundum, spinel and mullite.

The alu-dross may have a controlled particle size distribution. For example, the alu-dross may have particle size distribution such that 90% by weight of particles are below 1 mm, preferably 90% by weight below 200 µm. The average particle size of the alu-dross may be from 10 to 100 µm, such as 20 to 30 µm.

Contents of metallic aluminium and alumina (and other components) are on a dry basis and can be determined using standard methods. For instance, content of metallic aluminium can be determined by reacting the material with a strong base, such as NaOH. The amount of metallic aluminium can be determined from the amount of hydrogen gas released.

Alu-dross may preferably be sourced from waste products from secondary production of aluminium. In particular, the aluminium casting process provides a specific alumina-rich waste material described commonly as "alu-dross". This tends to contain significant proportions of metallic aluminium and is thus treated in order to retrieve the metallic aluminium. The alu-dross is generally crushed, milled and sieved. This produces some aluminium for re-sale and an aluminium-rich fraction which is sent to a furnace for re-use. As a by-product an alumina-rich powder is also produced. This powder can usefully be used as a source of metallic aluminium in the method of the invention. This alumina-rich powder generated from treatment of alu-dross (crushed alu-dross) may contain levels of halogen materials (by weight) of for instance 1 to 10%, preferably 1 to 8%. Halogens include in particular fluoride and chloride.

The aluminium-rich fraction, optionally together with other aluminium-containing waste materials, is subjected to re-melting in a furnace. This may be a rotating furnace or kiln. The aluminium waste may be subjected to plasma heating. A conventional furnace may be used. Salt is usually added to the furnace in order to reduce the surface tension of the aluminium and reduce oxidation. This process produces an aluminium fraction for resale, more alu-dross and a salt slag material. The salt slag can be subjected to a wet chemical process (involving water washing and high temperature treatment) which produces a salt fraction, which is recycled to the furnace, and a further alumina-rich powder, which may also be used as a source of metallic aluminium in the invention. This product tends to have lower content of halogen materials (e.g. fluoride) than the alumina-rich powder produced by treatment of alu-dross (crushed alu-dross). Its content of halogen (by weight) tends to be from 0 to 5%, often at least 0.5 or 1%, and is preferably not more than 3%.

As an alternative to alu-dross, a material comprising from 45 to 100 wt% metallic Al may be used as the source of metallic Al. Suitable materials are aluminium granulate and one or more blocks of metallic aluminium.

Blocks may take any suitable form, for example rods, bars, lumps, or another shape. Blocks may comprise from 45 to 100 wt% metallic aluminium. A rod or other block shape of metallic aluminium may be inserted directly into the mineral melt in the furnace. This method avoids excessive or premature oxidation of the metallic aluminium prior to mixing with the mineral melt pool, thereby improving the efficiency of the process.

Aluminium granulate (Al granulate) often requires a different set of process conditions than alu-dross does, to be used in this context. The proportion of metallic Al in Al granulate is usually much higher than in alu-dross. In alu-dross, the metallic Al is protected from oxidation by a greater proportion of other components such as Al₂O₃. Furthermore, the wt% of alu-dross as a proportion of the total mineral charge is too high to justify adding it directly to the melt pool: it would be thermally inefficient. On the other hand, the amount of Al granulate required as a proportion of the total mineral charge is much lower, at approximately 0.2 wt% of the total mineral charge, such as 0.1 to 0.5 wt% of the total mineral charge, such as 0.2 to 0.4 wt% of the total mineral charge, measured as metallic aluminium.

Therefore to avoid premature oxidation of the metallic Al component, Al granulate is added directly into the melt pool, or just above the melt pool, in the cyclone furnace. This may be described as direct injection. Preferably Al granulate is added by means of a burner or lance. Preferably, an oxyfuel burner having a central pipe for transport of the Al granulate is used.

The Al granulate is preferably added above the surface of the melt pool, such as at a point within 50 cm of the surface of the melt pool, preferably 30 cm.

Al granulate can be added alone, as a raw material component that comprises only Al granulate. Alternatively it can be pre-mixed with filler and the blend of Al granulate and filler added to the furnace as a blended raw material component. Suitable fillers include various raw materials that could be the additional raw materials used. For example, Al granulate may be mixed with filter fines (i.e. fine particulate raw material extracted from the exhaust filter of the cyclone furnace) prior to injection into the cyclone furnace. Suitable percentages of Al granulate in the blend with filler are 1 to 90%, such as 10 to 70%, such as 15 to 50%. Using a blend of Al granulate and other raw materials can improve dosing control of metallic aluminium in the process.

Al granulate is mixed well with the melt due to similar densities of the melt and metallic aluminium.

In addition, Al granulate is a much purer material than alu-dross and does not have the concerns of removing ammonia, for example.

The particle size (mean particle diameter, wherein particle diameter is taken to mean the largest dimension of a particle regardless of whether or not the particle is spherical) of the Al granulate may be no greater than 15 mm, such as less than 10 mm, such as less than 5 mm. In a preferred embodiment, the particle size (mean particle diameter, wherein particle diameter is taken to mean the largest dimension of a particle regardless of whether or not the particle is spherical) of the granulated Al may be no greater than 3 mm, such as less than 2 mm, such as less than 1 mm.

The residence time of particulate mineral material and of the mineral melt in a cyclone furnace is lower than in other types of mineral-melting furnaces and so fast reaction kinetics are important in this method.

In preferred embodiments the MMVF have the following levels of elements, calculated as oxides in wt%:
SiO₂: at least 30, 32, 35 or 37; not more than 51, 48, 45 or 43
CaO: at least 8 or 10; not more than 30, 25 or 20
MgO: at least 2 or 5; not more than 25, 20 or 15
FeO (including Fe₂O₃): at least 4 or 5; not more than 15, 12 or 10
FeO+MgO: at least 10, 12 or 15; not more than 30, 25 or 20
Na₂O+K₂O: zero or at least 1; not more than 10
CaO+Na₂O+K₂O: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5

The fibres preferably have sintering temperature above 800°C, more preferably above 1000°C.

The MMVF made by the method of the invention preferably have the composition in wt%:

| | |
|---|---|
| SiO₂ | 35 to 50 |
| Al₂O₃ | 12 to 30 |
| TiO₂ | up to 2 |
| Fe₂O₃ | 3 to 12 |
| CaO | 5 to 30 |
| MgO | up to 15 |
| Na₂O | 0 to 15 |
| K₂O | 0 to 15 |
| P₂O₅ | up to 3 |
| MnO | up to 3 |
| B₂O₃ | up to 3 |

Another preferred composition for the MMVF is as follows in wt%:
SiO₂ 39-55% preferably 39-52%
Al₂O₃ 16-27% preferably 16-26%
CaO 6-20% preferably 8-18%
MgO 1-5% preferably 1-4.9%
Na₂O 0-15% preferably 2-12%
K₂O 0-15% preferably 2-12%
R₂O (Na₂O + K₂O) 10-14.7% preferably 10-13.5%
P₂O₅ 0-3% preferably 0-2%
Fe₂O₃ (iron total) 3-15% preferably 3.2-8%
B₂O₃ 0-2% preferably 0-1%
TiO₂ 0-2% preferably 0.4-1%
Others 0-2.0%

A preferred range of SiO₂ is 39-44%, particularly 40-43%. A preferred range for CaO is 9,5-20%, particularly 10-18%.

Al₂O₃-content is preferably between 16 and 27%, preferably greater than 17% and/or preferably less than 25%, and the sum of SiO₂ and Al₂O₃ is preferably between 57 and 75%, preferably greater than 60% and/or preferably less than 72%. The quantity of alkali metal (sodium and potassium) oxides (R₂O) in this fibre composition is preferably relatively high but limited to between 10-14,7%, preferably 10 and 13,5%, with magnesia in an amount of at least 1%.

Preferably, Al₂O₃ is present in an amount of 17-25%, particularly 20-25%, in particular 21-24,5% and especially around 22-23 or 24% by weight. Advantageously, the magnesia content is at least 1,5%, in particular 2% and preferably 2-5% and particularly preferably >2,5% or 3%.

In the case that Al₂O₃ is present in an amount of at least 22% by weight, the amount of magnesia is preferably at least 1%, advantageously around 1-4%, preferably 1-2% and in particular 1,2-1,6%. The content of Al₂O₃ is preferably limited to 25% in order to preserve a sufficiently low liquidus temperature. When the content of Al₂O₃ is present in a lower amount of for example around 17-22%, the amount of magnesia is preferably at least 2%, especially around 2-5%.

The total amounts of the oxides of Fe and Mg are important for controlling the shrinkage of MMVF insulation. Furthermore the ratio of Fe(II):Fe(III) impacts the performance of MMVF insulation in a fire situation, where oxidation of Fe(ll) to Fe(lll) is a beneficial process.

Advantageously the fibres have a ratio of Fe(II):Fe(III) of above 2, such as above 3. The proportion of Fe(3+), based on total Fe in the melt, prior to the fiberisation step, and in the MMVF is generally less than 5%, preferably less than 3%. This aids in shrinkage prevention.

The amount of Fe(2+) and Fe(3+) can be determined using the Mössbauer method described in "The ferric/ferrous ratio in basalt melts at different oxygen pressures", Helgason et al, Hyperfine Interact., 45 (1989) pp 287-294.

The amount of total iron in the overall melt or fibre composition, based on total oxides in the melt or fibres, is calculated as Fe₂O₃. This is a standard means of quoting the amount of iron present in such an MMVF, a charge or a melt. The actual weight percentage of FeO and Fe₂O₃ present will vary based on the iron oxide ratio and/or redox state of the melt. As an example,

**Table 1**

| **Fe(3+)** | **Fe(2+^{/}Fe(3+) = 80/20** | | **Fe(2+)/Fe(3+) = 97/3** | |
|---|---|---|---|---|
| **Fe₂O₃** | **FeO** | **Fe₂O₃** | **FeO** | **Fe₂O₃** |
| w/w% | w/w% | w/w% | w/w% | w/w% |
| Fe₂O₃ | FeO | Fe₂O₃ | FeO | Fe₂O₃ |
| 3 | 2.2 | 0.6 | 2.6 | 0.09 |
| 4 | 2.9 | 0.8 | 3.5 | 0.12 |
| 5 | 3.6 | 1.0 | 4.4 | 0.15 |
| 6 | 4.3 | 1.6 | 5.2 | 0.18 |
| 7 | 5.0 | 1.4 | 6.1 | 0.21 |
| 8 | 5.8 | 1.6 | 7.0 | 0.24 |

The skilled person will therefore understand that the actual weight percentage of the iron oxides present will be dependent on the ratio of Fe(2+) to Fe(3+).

Any suitable method may be employed to form MMVF from the mineral melt. In particular, external centrifugation (cascade spinner) or internal centrifugation (spinning cup) may be used.

In the method of the invention gaseous fuel is used. In a preferred embodiment, biogas is used, to reduce the environmental impact of the process.

In the method, the combustion gas comprises oxygen to complete combustion of the fuel. The combustion gas may be air in its natural composition, pure oxygen, or oxygen-enriched air.

### BRIEF DESCRIPTION OF DRAWINGS

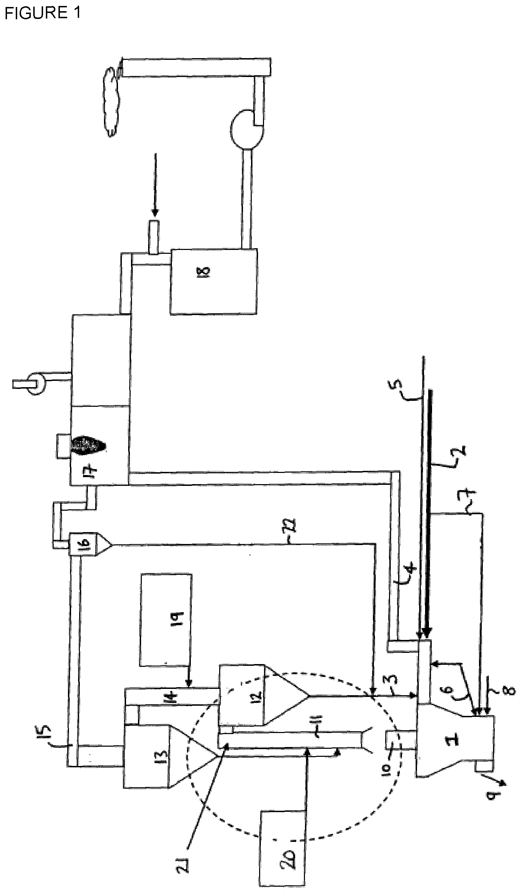

Figure 1 illustrates an exemplary layout of the cyclone furnace and cyclone preheater system.

### DETAILED DESCRIPTION

Figure 1 shows a cyclone furnace 1 which comprises a cylindrical top section, a frustoconical bottom section and a cylindrical base section. Preheated mineral material (with or without the component that is the source of metallic aluminium) is introduced into the cyclone furnace via a mixed mineral material conduit 3. The fuel is introduced via conduit 2. The mineral material is introduced together with combustion air via conduit 4 and secondary air which is provided in compressed air supply 5 and is introduced through a lance (not shown) into the cyclone furnace to ensure thorough mixing of the fuel with the combustion air and to sustain the circulating motion of the combustion gases and suspended material in the cyclone furnace 1. A minor amount of combustion gas and fuel are diverted from the main feed which leads to the top section of the cyclone furnace, to the bottom section of the cyclone furnace via routes which are shown in Figure 1 as 6 and 7 respectively. Secondary fuel, such as natural gas, is also injected through supply 8 into the base section of the cyclone furnace, shown in Figure 1 as 8.

The fuel is combusted in the combustion gas, which is preferably pure oxygen or oxygen-enriched air, in the cyclone furnace, thereby melting the mineral charge.

When alu-dross is used as the source of metallic aluminium, the alu-dross may be mixed with the other mineral component and then supplied to silo 19. From silo 19, the mineral charge, including alu-dross, is supplied to second conduit 14 and undergoes initial preheating in second preheater cyclone 13. The mineral charge is then introduced into first conduit 11 and subsequently passes to the first preheater cyclone 12. This option has the benefit of easily maintaining a stable relation between the metallic aluminium content and the other mineral components of the mineral charge.

Alternatively when alu-dross is used as the source of metallic aluminium, the alu-dross may be provided at ambient temperature to silo 20 and from silo 20 to the first conduit downstream to the other mineral components of the mineral charge, which is supplied from silo 19 as described above in the first option. The alu-dross mixes with the preheated other mineral component in the airflow. This option is useful when the alu-dross comprises some residual ammonia and there are restrictions on the amount of ammonia in the flue gas.

Another option is to include alu-dross directly into the cyclone furnace 1 at conduit 3. This option is less thermally efficient, but does ensure complete decomposition of any residual ammonia in the alu-dross due to the high temperature in the cyclone furnace 1.

When aluminium granulate or aluminium blocks are used as the source of metallic aluminium, the metallic aluminium is added directly to the cyclone furnace 1.

Metallic aluminium could be provided as aluminium granulate and added at location 8 via an oxy-fuel burner with a central injection lance for the metallic aluminium. The other mineral charge is provided from silo 19 and preheated as described above.

Alternatively, metallic aluminium could be provided in block form, shaped as a rod, bar, or lump. Block form aluminium is preferably added to the cyclone furnace separately from particulate mineral raw material and may be added directly to the melt pool. Smaller Al blocks may be injected into the furnace via burner ports. Larger Al blocks may be injected into the furnace from an inlet in the top of the furnace. Bulk aluminium may be blown or otherwise injected directly into the melt pool at the base of the furnace; this may be preferable to minimise oxidation of aluminium in the circulating gases within the furnace, thereby maximising the effect of the metallic aluminium interacting with the other mineral components.

In all all cases, the mineral charge is melted in the cyclone furnace 1 and the resultant mineral melt is collected in the base zone of the cyclone furnace 1 and exits the furnace via outlet 9. The exhaust gases that are generated from combustion of the fuel are fed through flue 10 at the top of the circulating combustion chamber to the first conduit 11 where they are used to heat the mineral materials. The exhaust gases then flow to a first cyclone preheater 12 where they are separated from the mineral charge. The exhaust gases flow from the first cyclone preheater 12 to the second cyclone preheater 13 via a second conduit 14. Following the second cyclone preheater 13 the exhaust gases flow through conduit 15 to a dust cyclone 16 and into a chamber 17 where indirect heat exchange with the combustion gas occurs to preheat the combustion gas. The exhaust gases are then treated to make them safe to pass to the atmosphere such as by filter 18 and, if needed, a DeSOx plant. Filter fines may be collected from filter 18 and recycled into the furnace 1.

Some of the mineral charge may be carried up with the exhaust gases from the second cyclone preheater 13 through conduit 15. This is separated from the exhaust gases in dust cyclone 16 and recycled back to join the preheated mineral materials via conduit 22.

The exhaust gases leave the circulating combustion chamber via a flue10. The exhaust gases enter the first conduit 11 and are quenched from a temperature of between 1500 and 1900 °C, usually around 1650 °C to a temperature of between 900 and 1200 °C, normally around 1100 °C by quenching air. The provision of hot exhaust gases at temperatures greater than 800 °C is beneficial in particular when there is a need to remove ammonia from alu-dross prior to melting.

The raw materials used as the other mineral components of the mineral charge can be selected from a variety of sources, as is known. These include basalt, diabase, nepheline syenite, glass cullet, bauxite, quartz sand, limestone, rasorite, sodium tetraborate, dolomite, soda, olivine sand, potash. Waste materials may also be used.

The MMV fibres may be made from the mineral melt in conventional manner. Generally they are made by a centrifugal fibre-forming process.

For instance the fibres may be formed by a spinning cup process in which they are thrown outwardly through perforations in a spinning cup. The melt is fiberised by the spinning cup technology (also sometimes described as internal centrifugation). The melt preferably has a temperature at the end of the feeder channel in the range 1260 °C -1300 °C before it is led to the spinning cup. The melt preferably cools down when it is transferred from the feeder channel to the internal part of the spinning cup in such a way that the temperature for the melt when flowing through the perforations of the spinning cup is in the range 1150 °C - 1220 °C.

The viscosity of the melt in the spinning cup is in the range of 50 to 400 Pa.s, preferably 100 to 320 Pa s, more preferably 150 - 270 Pa.s. If the viscosity is too low, fibres of the desired thickness are not formed. If the viscosity is too high, the melt does not flow through the apertures in the spinning cup at the right pull rate, which can lead to blocking of the apertures in the spinning cup.

The melt is preferably fiberised by the spinning cup method at a temperature between 1160 and 1210 °C. The viscosity of the melt is preferably in the range 100-320 Pa.s at the spinning temperature.

In an alternative fibre-forming method, melt may be thrown off a rotating disc and fibre formation may be promoted by blasting jets of gas through the melt.

In a preferred method fibre formation is conducted by pouring the melt onto the first rotor in a cascade spinner. Preferably in this case the melt is poured onto the first of a set of two, three or four rotors, each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The MMVF may be collected and consolidated to form a consolidated product comprising the MMVF. Typically such product may comprise additional ingredients such as binder, with MMVF being the major component. The fibres resulting from the spinning process are preferably collected on a conveyor belt.

Binder can be applied to the MMVF either during the fiberisation process, or post fiberisation. The binder may be applied by spraying the MMVF. Conventional types of binder for use with stone wool fibres may be used. The binder is then cured to produce a final product. The MMVF with binder is generally cured in a curing oven, usually by means of a hot air stream. The hot air stream may be introduced into the MMVF with binder from below, or above or from alternating directions in distinctive zones in the length direction of the curing oven. After curing, the cured binder composition binds the fibres to form a structurally coherent matrix of fibres.

The MMVF may be consolidated after collection, for instance by cross-lapping and/or longitudinal compression and/or vertical compression, in known manner. Usually consolidation occurs prior to curing of binder.

The MMVF produced by the method of the present invention, and the MMVF of the invention, have excellent fire resistance at 1000 °C. The MMVF can be made into a product for use in any of the conventional applications for MMVF, such as sound or heat insulation or fire protection. Such products include insulation products such as batts, granulate, boards, rolls, pipe sections, and other products such as ceiling tiles, wall tiles, façade elements, acoustic elements and loose fibres. The product may be used in high temperature environments, such as at least 400°C up to 1000°C.

The product may have any of the densities known in the art for the relevant application. For instance it may be in the range 20 to 1200 kg/m³, preferably 20 to 300 kg/m³, more preferably 20 to 150 kg/m³. Shrinkage benefits are seen for all product types, but it is observed that especially good shrinkage reduction is seen when the density of the product is relatively low, for instance not more than 50 kg/m³.

### EXAMPLES

### Example 1

Reference samples of consolidated MMVF products were prepared from a mineral melt (reference charge) having the following composition:

**Table 2**

| SiO₂ | Al₂O₃ | TiO₂ | Fe₂O₃ | FeO | CaO | MgO | Na₂O | K₂O | P₂O₅ | MnO |
|---|---|---|---|---|---|---|---|---|---|---|
| 42,6 | 18,5 | 0,5 | 6,9 | 0,0 | 18,9 | 9,2 | 1,9 | 0,8 | 0,2 | 0,5 |

The reference consolidated products were manufactured to a density of 30 kg/m³. The mineral melt was prepared in a cyclone furnace in accordance with Figure 1.

Invention samples of consolidated MMVF products were manufactured using MMVF spun from a mineral charge having the composition of Table 2 with the addition of 0.4 wt% Al granulate (equivalent to 0.2 wt% metallic Al). The added Al granulate was in addition to all of the components listed in Table 2. The densities of the example products were also 30 kg/m³.

The area shrinkage of the reference products and the example products was measured according to an internal test method consisting of 5 steps:
1) cutting, measuring and weighing test specimens from product test unit;
2) selecting representative test specimens from test unit;
3) removing binder at 590 °C;
4) sintering test specimens at 1000 °C +/- 20 °C for 30 minutes; and
5) Measure area of sintered test specimen.

The shrinkage is measured as a % reduction in surface area of each product. The major face of each product that is measured for shrinkage is equivalent to the major face that would be apparent in a finished product. For example, the reduction in length and width of a slab, but not its thickness, is measured.

Relative area shrinkage between raw material charge with and without addition of aluminium granulate

**Table 3 - aluminium granulate tests**

| **Sample Number** | **Shrinkage of reference samples** | **Shrinkage of invention samples** |
|---|---|---|
| 1 | 87,7 | 72,7 |
| 2 | 103,6 | 79,0 |
| 3 | 83,7 | 75,0 |
| 4 | 117,6 | |
| 5 | 107,6 | |
| **Normalised average shrinkage** | **100,0** | **75,6** |

### Example 2

Reference samples were prepared in the same way as for Example 1.

Invention samples were prepared in the same way as the reference samples, but with the addition of alu-dross.

**Table 4 - alu-dross tests**

| **Sample number** | **Shrinkage of reference samples** | **Shrinkage of invention samples** |
|---|---|---|
| 1 | 100,2 | 45,6 |
| 2 | 99,8 | 51,2 |
| 3 | | 46,5 |
| 4 | | 54,1 |
| **Normalised average shrinkage** | **100,0** | **49,4** |

## Claims

1. A method of making man-made vitreous fibres (MMVF) which comprise at least 3 wt% iron oxides determined as Fe₂O₃, the method comprising
providing a cyclone furnace,
providing mineral raw material comprising (a) material that comprises metallic aluminium and (b) other mineral component,
providing fuel and combustion gas to the cyclone furnace, wherein the fuel is gaseous,
melting the mineral raw material in the cyclone furnace to form a mineral melt,
and forming MMVF from the melt.

2. A method according to claim 1 wherein the material comprising metallic aluminium is particulate.

3. A method according to claim 1 or claim 2, wherein the material that comprises metallic aluminium is alu-dross.

4. A method according to claim 3 also comprising
providing a cyclone preheater system in connection with the cyclone furnace,
forming hot exhaust gases in the cyclone furnace, and
transporting hot exhaust gases from the cyclone furnace to the cyclone preheater system,
wherein the alu-dross enters the cyclone preheater system before being melted in the cyclone furnace such that the alu-dross is pre-heated prior to the melting step.

5. A method according to claim 4, wherein the cyclone preheater system comprises a first cyclone preheater and a second cyclone preheater, wherein the exhaust gases are transported from the cyclone furnace to the first cyclone preheater and from the first cyclone preheater to the second cyclone preheater, and from the second cyclone preheater to an exhaust outlet,
wherein the alu-dross is mixed with the other mineral component and the resulting mineral raw material is introduced to the second cyclone preheater, transported from the second cyclone preheater to the first cyclone preheater, and then transported from the first cyclone preheater to the cyclone furnace.

6. A method according to claim 4, wherein the cyclone preheater system comprises a first cyclone preheater and a second cyclone preheater, wherein the exhaust gases are transported from the cyclone furnace to the first cyclone preheater and from the first cyclone preheater to the second cyclone preheater, and from the second cyclone preheater to an exhaust outlet,
wherein the other mineral component is introduced to the second cyclone preheater and is transported from the second cyclone preheater to the first cyclone preheater,
wherein the alu-dross is introduced to the first cyclone preheater and mixes with the other mineral component in the flow of exhaust gases to form the mineral raw material, and
wherein the mineral raw material is transported from the first cyclone preheater to the cyclone furnace.

7. A method according to any of claims 2 to 6, wherein the alu-dross comprises from 0.5 to 10 wt% metallic aluminium and from 50 to 90 wt% aluminium oxide.

8. A method according to any of claims 1 to 7, wherein from 5 to 30 wt% of the mineral raw material is alu-dross.

9. A method according to claim 1 wherein the material that comprises metallic aluminium is a material comprising from 45 to 100 wt% metallic aluminium

10. A method according to claim 9, wherein the material that comprises metallic aluminium is aluminium granulate.

11. A method according to claim 10 wherein the aluminium granulate is added by direct injection into the cyclone furnace.

12. A method according to any preceding claim, wherein the mineral raw material comprises from 0.1 to 0.5 wt% metallic aluminium.

13. A method according to any preceding claim, wherein the fibres have a ratio of Fe(II):Fe(III) of above 2, such as above 3.

14. A method according to any preceding claim, further comprising consolidating the MMVF to form a consolidated product comprising the fibres.

15. A method according to any preceding claim, wherein the MMVF have a content of oxides, as wt.%, as follows:
SiO₂ 35 to 50
Al₂O₃ 12 to 30
TiO₂ up to 2
Fe₂O₃ 3 to 12
CaO 5 to 30
MgO up to 15
Na₂O 0 to 15
K₂O 0 to 15
P₂O₅ up to 3
MnO up to 3
B₂O₃ up to 3.

## Patentansprüche

1. Verfahren zum Herstellen von künstlichen glasartigen Fasern (MMVF), die wenigstens 3 Gew.-% Eisenoxide, bestimmt als Fe₂O₃, umfassen, wobei das Verfahren umfasst:
Bereitstellen eines Zyklonofens,
Bereitstellen von mineralischem Rohmaterial, umfassend (a) Material, das metallisches Aluminium umfasst, und (b) eine andere mineralische Komponente,
Bereitstellen von Brennstoff und Verbrennungsgas für den Zyklonofen, wobei der Brennstoff gasförmig ist,
Schmelzen des mineralischen Rohmaterials in dem Zyklonofen, um eine mineralische Schmelze auszubilden,
und Ausbilden von MMVF aus der Schmelze.

2. Verfahren nach Anspruch 1, wobei das Material, das metallisches Aluminium umfasst, teilchenförmig ist.

3. Verfahren nach Anspruch 1 oder 2, wobei das Material, das metallisches Aluminium umfasst, Alu-Schlacke ist.

4. Verfahren nach Anspruch 3, das ebenso umfasst:
Bereitstellen eines Zyklonvorwärmersystems in Verbindung mit dem Zyklonofen,
Ausbilden von heißen Abgasen in dem Zyklonofen, und
Transportieren heißer Abgase von dem Zyklonofen zu dem Zyklonvorwärmersystem,
wobei die Alu-Schlacke in das Zyklonvorwärmersystem eintritt, bevor sie in dem Zyklonofen geschmolzen wird, sodass die Alu-Schlacke vor dem Schmelzschritt vorgewärmt wird.

5. Verfahren nach Anspruch 4, wobei das Zyklonvorwärmersystem einen ersten Zyklonvorwärmer und einen zweiten Zyklonvorwärmer umfasst, wobei die Abgase von dem Zyklonofen zu dem ersten Zyklonvorwärmer und von dem ersten Zyklonvorwärmer zu dem zweiten Zyklonvorwärmer und von dem zweiten Zyklonvorwärmer zu einem Abgasauslass transportiert werden,
wobei die Alu-Schlacke mit den anderen mineralischen Komponenten gemischt wird und das entstehende mineralische Rohmaterial in den zweiten Zyklonvorwärmer eingeführt wird, von dem zweiten Zyklonvorwärmer zu dem ersten Zyklonvorwärmer transportiert wird und dann von dem ersten Zyklonvorwärmer zu dem Zyklonofen transportiert wird.

6. Verfahren nach Anspruch 4, wobei das Zyklonvorwärmersystem einen ersten Zyklonvorwärmer und einen zweiten Zyklonvorwärmer umfasst, wobei die Abgase von dem Zyklonofen zu dem ersten Zyklonvorwärmer und von dem ersten Zyklonvorwärmer zu dem zweiten Zyklonvorwärmer und von dem zweiten Zyklonvorwärmer zu einem Abgasauslass transportiert werden,
wobei die andere mineralische Komponente in den zweiten Zyklonvorwärmer eingeführt und von dem zweiten Zyklonvorwärmer zu dem ersten Zyklonvorwärmer transportiert wird,
wobei die Alu-Schlacke in den ersten Zyklonvorwärmer eingeführt wird und sich mit der anderen mineralischen Komponente in dem Abgasstrom mischt, um das mineralischen Rohmaterial auszubilden, und
wobei das mineralische Rohmaterial von dem ersten Zyklonvorwärmer zu dem Zyklonofen transportiert wird.

7. Verfahren nach einem der Ansprüche 2 bis 6, wobei die Alu-Schlacke 0,5 bis 10 Gew.-% metallisches Aluminium und 50 bis 90 Gew.-% Aluminiumoxid umfasst.

8. Verfahren nach einem der Ansprüche 1 bis 7, wobei 5 bis 30 Gew.-% des mineralischen Rohmaterials Alu-Schlacke sind.

9. Verfahren nach Anspruch 1, wobei das Material, das metallisches Aluminium umfasst, ein Material ist, das 45 bis 100 Gew.-% metallisches Aluminium umfasst.

10. Verfahren nach Anspruch 9, wobei das Material, das metallisches Aluminium umfasst, Aluminiumgranulat ist.

11. Verfahren nach Anspruch 10, wobei das Aluminiumgranulat durch direkte Injektion in den Zyklonofen zugegeben wird.

12. Verfahren nach einem der vorhergehenden Ansprüche, wobei das mineralische Rohmaterial 0,1 bis 0,5 Gew.-% metallisches Aluminium umfasst.

13. Verfahren nach einem der vorhergehenden Ansprüche, wobei die Fasern ein Verhältnis von Fe(II) : Fe(III) von über 2, wie über 3 aufweisen.

14. Verfahren nach einem der vorhergehenden Ansprüche, ferner umfassend das Konsolidieren der MMVF, um ein konsolidiertes Produkt auszubilden, das die Fasern umfasst.

15. Verfahren nach einem der vorhergehenden Ansprüche, wobei die MMVF einen Gehalt von Oxiden als Gew.-% wie folgt aufweisen:
SiO₂ 35 bis 50,
Al₂O₃ 12 bis 30,
TiO₂ bis zu 2
Fe₂O₃ 3 bis 12
CaO 5 bis 30
MgO bis zu 15
Na₂O 0 bis 15
K₂O 0 bis 15
P₂O₅ bis zu 3
MnO bis zu 3
B₂O₃ bis zu 3.

## Revendications

1. Procédé de fabrication de fibres vitreuses artificielles (FVA) qui comprennent au moins 3 % en poids d'oxydes de fer déterminés comme étant Fe₂O₃, le procédé consistant à
fournir un four à cyclone,
fournir une matière première minérale comprenant (a) une matière qui comprend de l'aluminium métallique et (b) un autre composant minéral,
fournir un combustible et un gaz de combustion au four à cyclone, dans lequel le combustible est gazeux,
faire fondre la matière première minérale dans le four à cyclone pour former une masse fondue minérale, et
former des FVA à partir de la masse fondue.

2. Procédé selon la revendication 1, dans lequel la matière comprenant de l'aluminium métallique est particulaire.

3. Procédé selon la revendication 1 ou la revendication 2, dans lequel la matière qui comprend de l'aluminium métallique est composée de scories d'aluminium.

4. Procédé selon la revendication 3 consistant aussi à
fournir un système de préchauffeur à cyclone en relation avec le four à cyclone,
former des gaz d'échappement chauds dans le four à cyclone, et
transporter des gaz d'échappement chauds du four à cyclone au système de préchauffeur à cyclone,
dans lequel les scories d'aluminium entrent dans le système de préchauffeur à cyclone avant d'être fondues dans le four à cyclone de telle sorte que les scories d'aluminium sont préchauffées avant l'étape de fusion.

5. Procédé selon la revendication 4, dans lequel le système de préchauffeur à cyclone comprend un premier préchauffeur à cyclone et un deuxième préchauffeur à cyclone, dans lequel les gaz d'échappement sont transportés du four à cyclone au premier préchauffeur à cyclone et du premier préchauffeur à cyclone au deuxième préchauffeur à cyclone, et du deuxième préchauffeur à cyclone à une sortie d'échappement,
dans lequel les scories d'aluminium sont mélangées avec l'autre composant minéral et la matière première minérale résultante est introduite dans le deuxième préchauffeur à cyclone, transportée du deuxième préchauffeur à cyclone au premier préchauffeur à cyclone, puis transportée du premier préchauffeur à cyclone au four à cyclone.

6. Procédé selon la revendication 4, dans lequel le système de préchauffeur à cyclone comprend un premier préchauffeur à cyclone et un deuxième préchauffeur à cyclone, dans lequel les gaz d'échappement sont transportés du four à cyclone au premier préchauffeur à cyclone et du premier préchauffeur à cyclone au deuxième préchauffeur à cyclone, et du deuxième préchauffeur à cyclone à une sortie d'échappement,
dans lequel l'autre composant minéral est introduit dans le deuxième préchauffeur à cyclone et est transporté du deuxième préchauffeur à cyclone au premier préchauffeur à cyclone,
dans lequel les scories d'aluminium sont introduites dans le premier préchauffeur à cyclone et se mélangent avec l'autre composant minéral dans le flux de gaz d'échappement pour former la matière première minérale, et
dans lequel la matière première minérale est transportée du premier préchauffeur au four à cyclone.

7. Procédé selon l'une quelconque des revendications 2 à 6, dans lequel les scories d'aluminium comprennent de 0,5 à 10 % en poids d'aluminium métallique et de 50 à 90 % en poids d'oxyde d'aluminium.

8. Procédé selon l'une quelconque des revendications 1 à 7, dans lequel de 5 à 30 % en poids de la matière première minérale sont des scories d'aluminium.

9. Procédé selon la revendication 1, dans lequel la matière qui comprend de l'aluminium métallique est une matière comprenant de 45 à 100 % en poids d'aluminium métallique

10. Procédé selon la revendication 9, dans lequel la matière qui comprend de l'aluminium métallique est composée de granulé d'aluminium.

11. Procédé selon la revendication 10, dans lequel le granulé d'aluminium est ajouté par injection directe dans le four à cyclone.

12. Procédé selon l'une quelconque des revendications précédentes, dans lequel la matière première minérale comprend de 0,1 à 0,5 % en poids d'aluminium métallique.

13. Procédé selon l'une quelconque des revendications précédentes, dans lequel les fibres ont un rapport de Fe(II):Fe(III) supérieur à 2, par exemple supérieur à 3.

14. Procédé selon l'une quelconque des revendications précédentes, consistant en outre à consolider les FVA pour former un produit consolidé comprenant les fibres.

15. Procédé selon l'une quelconque des revendications précédentes, dans lequel les FVA ont une teneur en oxydes, en % en poids, comme suit :
| | |
|---|---|
| SiO₂ | de 35 à 50 |
| Al₂O₃ | de 12 à 30 |
| TiO₂ | jusqu'à 2 |
| Fe₂O₃ | de 3 à 12 |
| CaO | de 5 à 30 |
| MgO | jusqu'à 15 |
| Na₂O | de 0 à 15 |
| K₂O | de 0 à 15 |
| P₂O₅ | jusqu'à 3 |
| MnO | jusqu'à 3 |
| B₂O₃ | jusqu'à 3. |
